# EUROPÄISCHE PATENTSCHRIFT

(11) **EP 2 604 381 B1**
(45) Veröffentlichungstag und Bekanntmachung des Hinweises auf die Patenterteilung: **02.07.2014**
(21) Anmeldenummer: 12007695.5
(22) Anmeldetag: 14.11.2012
(51) Int. Cl.: B23Q 3/10, B23K 37/04, B25B 5/00, B25H 1/00

(54) **Modulares Tragsystem zur Fixierung von Bauteilen**
Modular holding system for fixing pieces
Système modulaire de support de pièces

(30) Priorität: 16.12.2011 DE 102011121584
(43) Veröffentlichungstag der Anmeldung: 19.06.2013
(73) Patentinhaber: AUDI AG, 85045 Ingolstadt (DE)
(72) Erfinder: Knodel, Wilhelm, 85107 Baar-Ebenhausen (DE); Dorner, Reinhard, 85077 Manching (DE)
(74) Vertreter: Geissler, Manfred

(56) Entgegenhaltungen:
- EP-A2- 1 043 116
- EP-B1- 0 828 586
- EP-B1- 1 533 072
- DE-A1- 19 716 874
- DE-A1-102005 060 151

## Beschreibung

Die Erfindung betrifft ein modulares Tragsystem zur Fixierung von Bauteilen, wie etwa Span-, Greif- oder Saugeinrichtungen, insbesondere bei der Rohbaufertigung von Karosserien von Kraftfahrzeugen, nach dem Oberbegriff des Patentanspruches 1.

Ein derartiges Tragsystem ist aus der EP 0 828 586 B9 bekannt, bei dem ein hochkant aufgestelltes Grund-Profilrohr oberseitig ein Kopfteil trägt, an dem ein Bearbeitungswerkzeug zum Einspannen von Blechen im Zuge einer Kraftfahrzeugs-Montagestraße montiert ist. Das Profilrohr ist als ein Präzisionsstahlrohr ausgeführt, dessen Länge und Positionierung nach Bedarf zugeschnitten und gebohrt wird. Zur Höhenanpassung und Winkelstellung des Bearbeitungswerkzeuges ist daher die Länge des Profilrohres und die Lage der Fixierbohrung entsprechend anzupassen, was fertigungstechnisch mit hohem Aufwand verbunden ist. Aus der EP 1 533 072 B1 ist ein weiteres gattungsgemäßes Tragsystem bekannt, bei dem ein Vielkant-Profilrohr mit seitlichen Rasterflächen vorgesehen ist. In jeder der Rasterflächen sind entlang der Rohr-Längsrichtung ausgerichtete Lochreihen mit Rasterbohrungen vorgesehen. An den Rasterbohrungen können in unterschiedlicher Höhenlage jeweils Anbindungsteile des Bearbeitungswerkzeuges mit Hilfe von Schraubelementen montiert werden. Die Schraubelemente sind jeweils durch eine Rasterbohrung des Profilrohrs und durch eine Schraubbohrung des Anbindungsteils geführt, die axial fluchtend zueinander ausgerichtet sind. Somit kann das Bearbeitungswerkzeug um zumindest eine Stufenhöhe verstellt werden, die dem ersten oder dem zweiten jeweils durch den Rasterabstand der im Profilrohr ausgebildeten Rasterbohrungen entspricht.

Die Aufgabe der Erfindung besteht darin, ein modulares Tragsystem zur Fixierung eines Bearbeitungswerkzeuges bereitzustellen, bei dem in einfacher Weise ein maßgenauer Zusammenbau mit lagerichtig höhenpositionierbarem Bearbeitungswerkzeug durchführbar ist.

Die Aufgabe ist durch die Merkmale des Patentanspruches 1 gelöst. Bevorzugte Weiterbildungen der Erfindung sind in den Unteransprüchen offenbart.

Erfindungsgemäß weist das Tragsystem ein Profilrohr auf, das mit zumindest einer ersten Lochreihe aus in Rohr-Längsrichtung um einen ersten Rasterabstand voneinander beabstandeten Rasterbohrungen ausgebildet ist. Zudem weist das Tragsystem ein dem Bearbeitungswerkzeug zugeordnetes Anbindungsteil auf, das mit einer zweiten Lochreihe aus in Rohr-Längsrichtung um einen zweiten Rasterabstand voneinander beabstandeten Schraubbohrungen ausgebildet ist. Das Anbindungsteil ist am Profilrohr mit zumindest einem Schraubelement verschraubt, das durch zueinander axial fluchtend angeordnete Raster- und Schraubbohrungen geführt ist. Zur Grobjustierung einer vom Montageboden beabstandeten Höhenposition des Bearbeitungswerkzeugs ist das Anbindungsteil um zumindest eine Stufenhöhe verstellbar. Diese Mindest-Stufenhöhe entspricht dem ersten oder dem zweiten Rasterabstand. Gemäß dem kennzeichnenden Teil des Patentanspruches 1 ist darüber hinaus eine Feinjustierung der Bauhöhe des Bearbeitungswerkzeugs ermöglicht. Hierzu ist dem Tragsystem ein Satz von Ausgleichsplatten unterschiedlicher Materialstärke zugeordnet. Damit wird eine zusätzliche Höhenanpassung erreicht, bei der dem Fußteil des Profilrohrs eine oder mehrere solcher Ausgleichsplatten unterlegbar sind. Die Ausgleichsplatten können zumindest teilweise eine Materialstärke aufweisen, die kleiner als die oben erwähnten Rasterabstände sind. Beispielhaft können die Materialstärken in einem Bereich von 0,5 mm bis 15 mm liegen. Durch Kombination verschiedener Raster- und Schraubbohrungen sowie Ausgleichsplatten unterschiedlicher Materialstärke kann daher jedes geforderte Höhenmaß des Bearbeitungswerkzeugs erreicht werden.

Auf diese Weise kann die Höhenpositionierung des Bearbeitungswerkzeuges in zwei Arbeitsschritten erfolgen: Zunächst kann in einer Grobjustierung das Anbindungsteil in einer passenden Rasthöhe am Profilrohr montiert werden. Anschließend kann in einer Feinjustierung zumindest eine oder mehrere Ausgleichsplatten unterschiedlicher Materialstärke dem Profilrohr untergelegt werden, um die endgültige Höhenposition des Bearbeitungswerkzeugs zu erreichen.

Bevorzugt kann der erste Rasterabstand der Lochreihe des Profilrohres ein ganzzahliges Vielfaches, insbesondere das Doppelte, des zweiten Rasterabstandes der Lochreihe des Anbindungsteils sein. Beispielhaft kann der erste Rasterabstand 30mm und der zweite Rasterabstand 15mm betragen.

Das Anbindungsteil kann besonders bevorzugt als ein stirnseitiges Kopfteil oberseitig am Profilrohr montiert sein. Im Betrieb erfolgt eine Krafteinleitung vom Bearbeitungswerkzeug über das Anbindungsteil und das Profilrohr in den Montageboden. Trotz dieser Kraftübertragung ist zu gewährleisten, dass das Bearbeitungswerkzeug nicht aus seiner Höhenposition ausgelenkt wird. Vor diesem Hintergrund kann das Anbindungsteil und/oder das Fußteil zumindest zwei Momentenstützen aufweisen, die diametral gegenüberliegend in seitlicher Anlage mit dem Profilrohr sind.

In einer weiteren Ausführungsform kann das Anbindungsteil zur lagerichtigen Positionierung zumindest ein Zentrierelement, insbesondere einen Zentrierstift, aufweisen. Dieser kann mit einem, im Vergleich zu den Schraubelementen reduzierten Lochspiel durch die jeweilige Rasterbohrung geführt sein. Das Profilrohr kann beispielhaft polygonförmig mit Rasterflächen ausgeführt sein, die an Rohrlängskanten ineinander übergehen. Demgegenüber kann das Anbindungsteil zur Lagesicherung in der Radialrichtung Zentrierflächen aufweisen, die der Rohrform des Profilrohres konturangepasst sind. Auf diese Weise kann das Anbindungsteil in der Radialrichtung in unterschiedlichen Winkelstellungen am Profilrohr montiert werden. In jeder der Rasterflächen des polygonförmigen Profilrohres kann jeweils eine Lochreihe mit Rasterbohrungen vorgesehen sein. Das Lochbild dieser Lochreihen kann bevorzugt identisch sein.

Wie oben erwähnt, erfolgt die Lagesicherung in der Radialrichtung durch Formschlussverbindung der Zentrierflächen des Anbindungsteiles mit dem Profilrohr. Zur Vermeidung einer Überbestimmung kann das Zentrierelement in der Radialrichtung mit einem Bewegungsspiel in der Rasterbohrung angeordnet sein. Demgegenüber kann das Zentrierelement zur Lagesicherung des Anbindungsteiles in der Rohr-Längsrichtung mit einem im Vergleich zur Radialrichtung reduzierten Bewegungsspiel, insbesondere spielfrei, in der Rasterbohrung angeordnet sein.

Bevorzugt kann hierzu das Zentrierelement ein Schwertstift sein, der in der Radialrichtung jeweils abgeflachte Seitenflächen und in der Rohrlängsrichtung Anschlagflächen aufweist, die mit geringem Bewegungsspiel der jeweiligen Rasterbohrung konturangepasst ist.

Die vorstehend erläuterten und/oder in den Unteransprüchen wiedergegebenen vorteilhaften Aus- und/oder Weiterbildungen können - außer zum Beispiel in den Fällen eindeutiger Abhängigkeiten und unvereinbarer Alternativen - einzeln oder aber auch in beliebiger Kombination miteinander zur Anwendung kommen.

Die Erfindung und ihre vorteilhafte Aus- und Weiterbildungen sowie deren Vorteile werden nachfolgend anhand von Zeichnungen näher erläutert.

Es zeigen:
- Fig. 1: in einer perspektivischen Darstellung ein modulares Tragsystem;
- Fig. 2: eine Teilseitenansicht entlang der Schnittebene I-I aus der Fig. 1;
- Fig. 3 und 4: jeweils in einer Seitenansicht und in einer perspektivischen Darstellung ein Anbindungsteil zur Anbindung des Bearbeitungswerkzeuges an dem Profilrohr;
- Fig. 5 und 6: grob schematische Prinzipskizzen, die jeweils ein Zentrierelement und ein Schraubelement zeigen, die durch eine Rasterbohrung des Profilrohrs geführt sind; und
- Fig. 7: in vergrößerter Darstellung ein Fußteil des Profilrohrs.

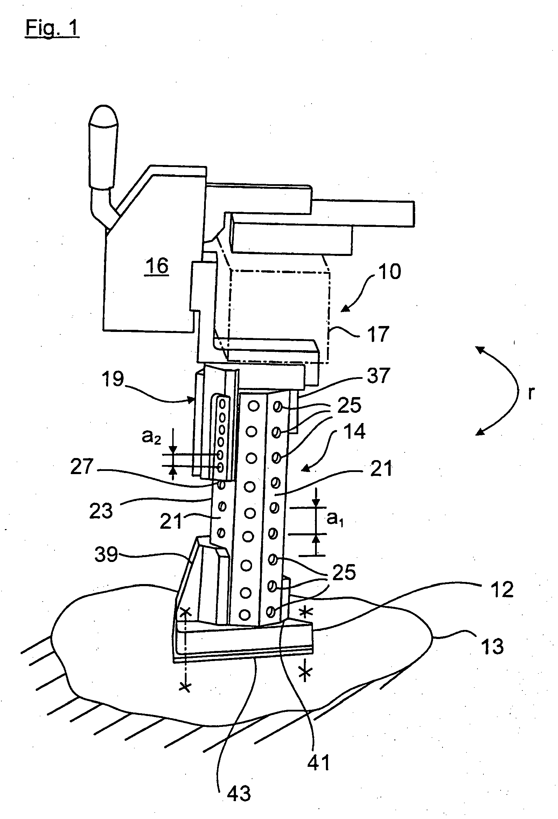

In der Fig. 1 ist raumbildliche Darstellung eines modulares Tragsystemes 10 gezeigt, das ein unteres Fußteil 12 beziehungsweise eine untere Befestigungskonsole aufweist, die an einem angedeuteten Montageboden 13 befestigt ist. Das Fußteil 12 trägt ein im Querschnitt achtkantiges Profilteil 14, das an seinem oberen Ende ein nicht näher dargestelltes Bearbeitungswerkzeug 16 aufnimmt, um ein strichpunktiert angedeutetes Bauteil 17 zu verspannen. Das Bearbeitungswerkzeug 16 ist in nicht näher gezeigter Weise an einem Anbindungsteil 19 montiert, das wiederum fest mit dem Profilrohr 14 verschraubt ist.

Das gezeigte Tragsystem 10 dient zur Fixierung von Bauteilen in Vorrichtungen, um eine maßhaltige Verbindung zu Schweißgruppen beziehungsweise Zusammenbauten zu gewährleisten. Das Tragsystem 10 kann sowohl in der Prototypen- und Vorserienfertigung als auch in der Serienfertigung von Karosserien von Kraftfahrzeugen eingesetzt werden.

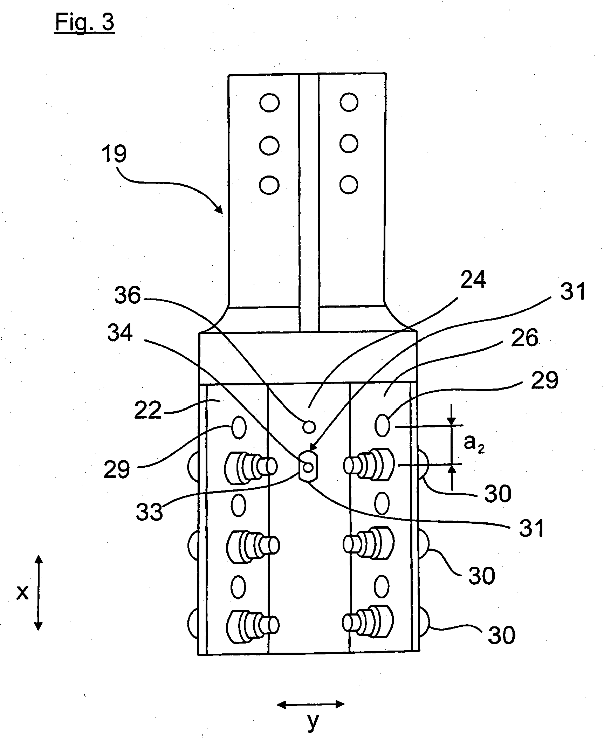

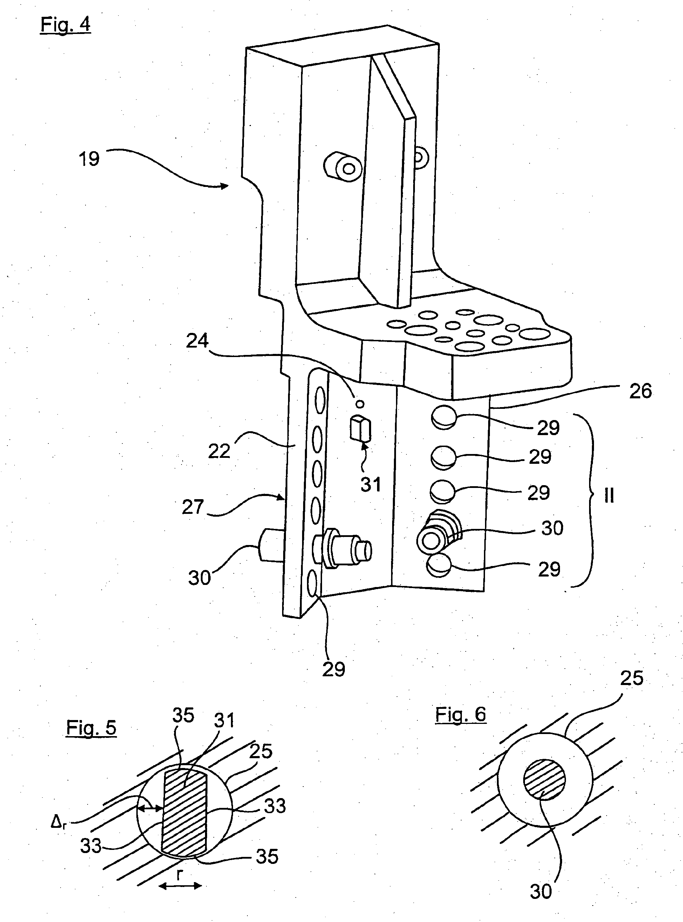

Wie aus der Fig. 1 hervorgeht, weist das polygonförmige Profilrohr 14 Rasterflächen 21 auf, die an Rohrlängskanten 23 ineinander übergehen. Zur Lagesicherung in der Radialrichtung r weist das Anbindungsteil 19 Zentrierflächen 22, 26 (Fig. 3 und 4) auf, die der Polygonform des Profilrohrs 14 konturangepasst sind. In der Radialrichtung zwischen den beiden Zentrierflächen 22, 26 ist Tragfläche 24 vorgesehen. Diese ist vom Profilrohr 14 beabstandet, um eine Überbestimmung zu vermeiden. Auf diese Weise kann das Anbindungsteil 19 in der Radialrichtung r in unterschiedlichen Winkelstellungen am Profilrohr 14 montiert werden.

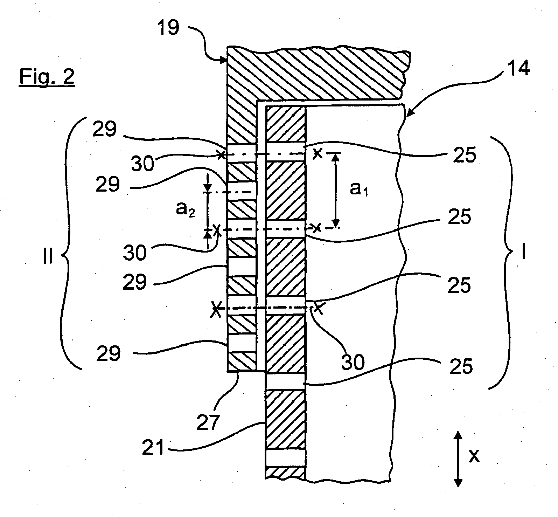

In jeder der Rastflächen 21 des Profilrohrs 14 ist eine Lochreihe I (Fig. 2) mit Rasterbohrungen 25 ausgebildet, die jeweils in der Rohrlängsrichtung x über einen ersten Rasterabstand a₁ voneinander beabstandet sind.

Zur Verschraubung am Profilrohr 14 weist das Anbindungsteil 19 einen seitlichen Stützarm 27 (Fig. 2) auf, in dem die Zentrier- und Tragflächen 22, 24, 26 ausgebildet sind. Die in der Radialrichtung r äußeren Zentrierflächen 22, 26 sind gemäß der Fig. 2 jeweils mit Lochreihen II von Schraublöchern 29 durchsetzt, die ebenfalls in der Rohr-Längsrichtung x ausgerichtet sind. Die Schraubbohrungen 29 sind gemäß den Fig. 1 und 2 über einen zweiten Rasterabstand a₂ voneinander beabstandet, der im Vergleich zum oben genannten ersten Rasterabstand a₁ halbiert ist. Auf diese Weise kann in jeder Lochreihe I des Anbindungsteiles 19 jeweils jede zweite Schraubbohrung 29 axial fluchtend in Überdeckung mit den Rasterbohrungen 25 am Profilrohr 14 gebracht werden.

In der, in der Fig. 3 und 4 gezeigten mittleren Tragfläche 24 ist ein Schwertstift 31 montiert, der in der Radialrichtung r abgeflachte Seitenflächen 33 sowie in der Rohrlängsrichtung x Anschlagflächen 35 aufweist, die dem Durchmesser der Rasterbohrungen 25 jeweils konturangepasst sind. Der Schwertstift 31 kann an zwei unterschiedlichen Befestigungsstellen 34 und 36 (Fig. 3) positioniert werden, die jeweils in gleicher Höhe mit Schraublöchern 29 der benachbarten äußeren Zentrierflächen 22, 26 sind. Der Schwertstift 31 ist so ausgelegt, dass er in Radialrichtung r mit Bewegungsspiel Δr (Fig. 5) in der Rasterbohrung 25 gelagert ist. In der Längsrichtung x ist der Schwertstift 31 - im Vergleich zu einem in der Fig. 6 gezeigten, durch die Rasterbohrung 25 geführten Schraubelement 30 - mit seinen beiden Anlageflächen 35 dagegen weitgehend spielfrei in der Rasterbohrung 25 angeordnet.

Gemäß der Fig. 1 weist das Anbindungsteil 19 neben dem seitlichen Stützarm 27 eine weitere Momentenstütze 37 auf, die diametral gegenüberliegend in Anlage mit dem Profilrohr 14 ist. Auf diese Weise ergibt sich eine zweiseitige Momentenabstützung, die die Verbindungssteifigkeit zwischen dem Anbindungsteil 19 und dem Profilrohr 14 erhöht. In gleicher Weise wie das Anbindungsteil 19 weist auch das Fußteil 12 einen seitlich am Profilrohr verschraubten Stützarm 39 auf. Diametral gegenüberliegend zum Stützarm 39 ist eine zusätzliche Momentenstütze 41 vorgesehen, mit der ebenfalls eine beidseitige Momentenabstützung des Profilrohrs 14 ermöglicht ist.

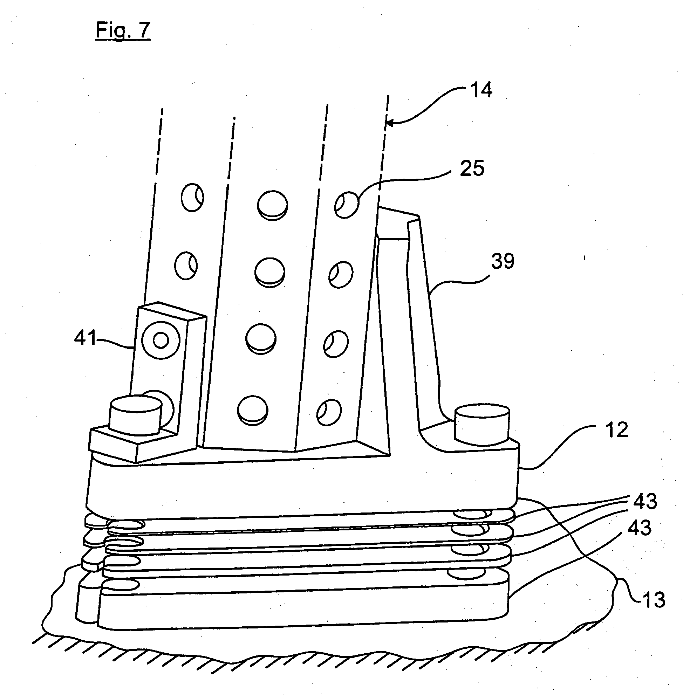

In der Fig. 1 ist das Fußteil 12 des Tragsystems 10 nicht unmittelbar am Montageboden 13 verschraubt, sondern unter Zwischenlage weiterer Ausgleichsplatten 43. Ein Satz von Ausgleichsplatten 43 sowie das Fußteil 12 sind in der Fig. 7 in Explosionsdarstellung gezeigt. Demzufolge weisen die Ausgleichsplatten 43 unterschiedliche Materialstärken auf. Die Ausgleichsplatten 43 können je nach Bedarf in unterschiedlicher Anzahl dem Fußteil 12 untergelegt werden.

Die Einstellung der Höhenposition des Aufnahmewerkzeugs 16 kann daher erfindungsgemäß in zwei Arbeitsschritten erfolgen. Zunächst wird eine Grobjustierung durchgeführt, bei der das Anbindungsteil 19 in einer geeigneten Rasthöhe am Profilrohr 14 montiert wird. Anschließend kann eine Feinjustierung erfolgen, bei der zusätzlich eine oder mehrere Ausgleichsplatten 43 passender Materialstärke dem Fußteil 12 untergelegt werden. Auf diese Weise kann eine exakte Höhenpositionierung des Bearbeitungswerkzeuges 16 erfolgen, bei der keine zusätzlichen Hilfs- oder Messmittel erforderlich sind.

## Patentansprüche

1. Modulares Tragsystem (10) zur Fixierung eines Bearbeitungswerkzeuges (16), insbesondere bei der Rohbaufertigung von Kraftfahrzeug-Karosserien, welches Tragsystem (10) ein über ein Fußteil (12) an einem Montageboden (13) befestigtes Profilrohr (14), das mit zumindest einer ersten Lochreihe (I) aus in Rohr-Längsrichtung (x) um einen ersten Rasterabstand (a₁) voneinander beabstandeten Rasterbohrungen (25) ausgebildet ist, und ein dem Bearbeitungswerkzeug (16) zugeordnetes Anbindungsteil (19) aufweist, **dadurch gekennzeichnet, dass** das Anbindungsteil (19) mit einer zweiten Lochreihe (II) aus in Rohr-Längsrichtung (x) um einen zweiten Rasterabstand (a₂) voneinander beabstandeten Schraubbohrungen (29) ausgebildet ist, wobei das Anbindungsteil (19) mit zumindest einem Schraubelement (30) am Profilrohr (14) verschraubt ist, das durch zueinander axial fluchtend angeordnete Raster- und Schraubbohrungen (25, 29) geführt ist, und zur Grobeinstellung einer vom Montageboden (13) beabstandeten Höhenposition des Bearbeitungswerkzeugs (16) das Anbindungsteil (19) um zumindest eine Stufenhöhe höhenverstellbar ist, die dem ersten oder dem zweiten Rasterabstand (a₁, a₂) entspricht, und dass zur Feineinstellung der Höhenposition des Bearbeitungswerkzeugs (16) dem Tragsystem (10) ein Satz von Ausgleichsplatten (43) unterschiedlicher Materialstärke zugeordnet ist, von denen zur Höhenanpassung des Bearbeitungswerkzeugs (16) dem Fußteil (12) eine oder mehrere unterlegbar sind.

2. Modulares Tragsystem nach Anspruch 1, **dadurch gekennzeichnet, dass** der erste Rasterabstand (a₁) der Lochreihe (I) des Profilrohres (14) ein ganzzahliges Vielfaches, insbesondere das Doppelte, des zweiten Rasterabstandes (a₂) der Lochreihe (11) des Anbindungsteils (19) ist.

3. Modulares Tragsystem nach Anspruch 2, **dadurch gekennzeichnet, dass** die Ausgleichsplatten (43) zumindest teilweise Materialstärken aufweisen, die kleiner als der Rasterabstand (a₁, a₂) ist.

4. Modulares Tragsystem nach einem der vorhergehenden Ansprüche, **dadurch gekennzeichnet, dass** das Anbindungsteil (19) zur lagerichtigen Positionierung am Profilrohr (14) zumindest ein Zentrierelement (31), insbesondere Zentrierstift, aufweist, das mit einem im Vergleich zum Schraubelement (30) reduzierten Lochspiel durch eine Rasterbohrung (25) geführt ist.

5. Modulares Tragsystem nach einem der vorhergehenden Ansprüche, **dadurch gekennzeichnet, dass** das Profilrohr (14) polygonförmig mit Rasterflächen (21) ausgebildet ist, die an Längskanten (23) ineinander übergehen, und dass in jeder der Rasterflächen (21) jeweils eine Lochreihe (I) mit Rasterbohrungen (25) ausgebildet ist.

6. Modulares Tragsystem nach Anspruch 5, **dadurch gekennzeichnet, dass** das Anbindungsteil (19) zur Lagesicherung in der Radialrichtung (r) Zentrierflächen (22, 26) aufweist, die der Rohrform des Profilrohrs (14) konturangepasst sind, wobei insbesondere eine mittlere Tragfläche (24) das Zentrierelement (31) trägt und in den in der Radialrichtung äußeren Zentrierflächen (22, 26) jeweils eine Lochreihe (II) mit Schraubbohrungen (29) ausgebildet ist.

7. Modulares Tragsystem nach Anspruch 5 **dadurch gekennzeichnet, dass** das Anbindungsteil (19) in Rohr-Längsrichtung (x) voneinander beabstandete Befestigungsstellen (34, 36) aufweist, an die das Zentrierelement (31) montierbar ist.

8. Modulares Tragsystem nach einem der Ansprüche 4 bis 7, **dadurch gekennzeichnet, dass** das Zentrierelement (31), insbesondere ein Schwertstift, in der Radialrichtung (r) des Profilrohrs (14) mit einem Bewegungsspiel (Δr) in der Rasterbohrung (25) angeordnet ist und zur Lagesicherung in der Rohrlängsrichtung (x) mit einem im Vergleich zur Umfangsrichtung (r) reduzierten Bewegungsspiel, insbesondere spielfrei, angeordnet ist.

9. Modulares Tragsystem nach einem der vorhergehenden Ansprüche, **dadurch gekennzeichnet, dass** das Anbindungsteil (19) und/oder das Fußteil (12) zumindest zwei Momentenstützen (27, 37; 39, 41) aufweist, die einander diametral gegenüberliegend seitlich in Anlage mit dem Profilrohr (14) sind.

## Claims

1. Modular support system (10) for fixing a machining tool (16), in particular during production of the shell of motor vehicle bodies, which support system (10) comprises a profile tube (14), which is attached to a mounting base (13) via a footing part (12) and is formed with at least one first line of holes (I) consisting of grid bores (25) spaced apart by a first grid spacing (a₁) in the tube longitudinal direction (x), and a connection part (19) assigned to the machining tool (16), **characterised in that** the connection part (19) is formed with a second line of holes (II) consisting of screw bores (29) spaced apart by a second grid spacing (a₂) in the tube longitudinal direction (x), the connection part (19) being screwed on the profile tube (14) by means of at least one screw element (30), which profile tube is guided through grid and screw bores (25, 29) that are axially aligned with one another, and the connection part (19) being adjustable in height by at least one step level, which corresponds to the first or second grid spacing (a₁, a₂), so as to roughly adjust a height position, at a spacing from the mounting base (13), of the machining tool (16), and **in that** a set of compensating plates (43) of various material thicknesses is assigned to the support system (10) for finely adjusting the height position of the machining tool (16), it being possible for one or more of these compensating plates to be placed below the footing part (12) in order to adapt the height of the machining tool (16).

2. Modular support system according to claim 1, **characterised in that** the first grid spacing (a₁) of the line of holes (I) of the profile tube (14) is an integral multiple of the second grid spacing (a₂) of the line of holes (II) of the connection part (19), in particular double that of the line of holes of the connection part.

3. Modular support system according to claim 2, **characterised in that** at least some of the compensating plates (43) have material thicknesses that are smaller than the grid spacing (a₁, a₂).

4. Modular support system according to any of the preceding claims, **characterised in that** the connection part (19), in order to be correctly positioned on the profile tube (14), comprises at least one centring element (31), in particular a centring pin, which is guided through a grid bore (25) with a hole clearance that is reduced by comparison with the screw element (30).

5. Modular support system according to any of the preceding claims, **characterised in that** the profile tube (14) is polygonal and has grid surfaces (21) which merge into one another at longitudinal edges (23), and **in that** in each case a line of holes (I) having grid bores (25) is formed in each of the grid surfaces (21).

6. Modular support system according to claim 5, **characterised in that** the connection part (19), in order to be secured in position in the radial direction (r), comprises centring surfaces (22, 26), the contours of which are adapted to the tube shape of the profile tube (14), in particular a central support surface (24) supporting the centring element (31) and a line of holes (II) having screw bores (29) being formed in each of the centring surfaces (22, 26), which are outer in the radial direction.

7. Modular support system according to claim 5, **characterised in that** the connection part (19) comprises fastening points (34, 36) which are spaced apart in the tube longitudinal direction (x) and onto which the centring element (31) can be mounted.

8. Modular support system according to any of claims 4 to 7, **characterised in that** the centring element (31), in particular a sword pin, is arranged in the grid bore (25), with a movement play (Δr), in the radial direction (r) of the profile tube (14) and is arranged with a movement play that is reduced by comparison with the circumferential direction (r), in particular with no play, in order to be secured in position in the tube longitudinal direction (x).

9. Modular support system according to any of the preceding claims, **characterised in that** the connection part (19) and/or the footing part (12) comprise at least two moment supports (27, 37; 39, 41) which are in lateral contact with the profile tube (14) in diametrically opposite positions.

## Revendications

1. Système modulaire de support (10) pour la fixation d'un outil d'usinage (16), en particulier lors de la fabrication de la structure brute de carrosseries d'automobiles, lequel système de support (10) présente un tube profilé (14) fixé sur une base de montage (13), lequel tube se présente avec au moins une première rangée perforée (I) d'alésages modulaires (25) espacés l'un de l'autre d'un premier pas (a₁) dans la direction longitudinale (x) du tube, et une partie de liaison (19) affectée à l'outil d'usinage (16), **caractérisé en ce que** la partie de liaison (19) se présente avec au moins une seconde rangée perforée (II) d'alésages taraudés (29) espacés l'un de l'autre d'un second pas (a₂), dans lequel la partie de liaison (19) est vissée sur le tube profilé (14) via au moins un élément fileté (30), qui est guidé à travers les alésages modulaires et taraudés (25, 29) mutuellement ménagés dans l'alignement axial, et, pour régler grossièrement une position en hauteur de l'outil d'usinage (16) écartée de la base de montage (13), la partie de liaison (19) peut être réglée en hauteur d'au moins une hauteur d'échelon qui correspond au premier ou au second pas (a₁, a₂), et **en ce que**, pour effectuer le réglage fin de la position en hauteur de l'outil d'usinage (16), on affecte au système de support (10) un jeu de plaques de compensation (43) de différentes épaisseurs de matériau, que l'on peut intercaler à raison d'une ou plusieurs unités pour adapter en hauteur l'outil d'usinage (16) par rapport à la partie de pied (12).

2. Système modulaire de support selon la revendication 1, **caractérisé en ce que** le premier pas (a₁) de la rangée perforée (I) du tube profilé (14) est un multiple entier, en particulier le double, du second pas (a₂) de la rangée perforée (II) de la partie de liaison (19).

3. Système modulaire de support selon la revendication 2, **caractérisé en ce que** les plaques de compensation (43) présentent au moins en partie des épaisseurs de matériau qui sont plus petites que le pas (a₁, a₂).

4. Système modulaire de support selon l'une quelconque des revendications précédentes, **caractérisé en ce que** la partie de liaison (19) présente pour un positionnement correctement localisé sur le tube profilé (14) au moins un élément de centrage (31), en particulier une goupille de centrage, qui est guidé(e) à travers un alésage modulaire (25) avec un jeu de trous réduit en comparaison de l'élément fileté (30).

5. Système modulaire de support selon l'une quelconque des revendications précédentes, **caractérisé en ce que** le tube profilé (14) se présente sous une forme polygonale avec des surfaces modulaires (21), qui se fondent l'une dans l'autre sur les arêtes longitudinales (23) et **en ce que**, dans chacune des surfaces modulaires (21), respectivement, une rangée perforée (I) avec des alésages modulaires (25) est formée.

6. Système modulaire de support selon la revendication 5, **caractérisé en ce que** la partie de liaison (19) présente, pour garantir la position dans la direction radiale (r), des surfaces de centrage (22, 26) dont le contour est adapté à celui de la forme du tube profilé (14), dans lequel, en particulier, une surface de support centrale (24) porte l'élément de centrage (31) et, dans les surfaces de centrage (22, 26) extérieures dans la direction radiale, respectivement, une rangée perforée (II) avec des alésages taraudés (29) est formée.

7. Système modulaire de support selon la revendication 5, **caractérisé en ce que** la partie de liaison (19) présente des points de fixation (34, 36) espacés l'un de l'autre dans la direction longitudinale (x) du tube, sur lesquels l'élément de centrage (31) peut être monté.

8. Système modulaire de support selon l'une quelconque des revendications 4 à 7, **caractérisé en ce que** l'élément de centrage (31), en particulier une goupille ensiforme, est aménagé(e) dans la direction radiale (r) du tube profilé (14) avec un jeu de déplacement (Δr) dans l'alésage modulaire (25) et est disposé(e) pour garantir la position dans la direction longitudinale (x) du tube avec un jeu de déplacement réduit en comparaison de la direction périphérique (r), en particulier sans jeu.

9. Système modulaire de support selon l'une quelconque des revendications précédentes, **caractérisé en ce que** la partie de liaison (19) et/ou la partie de pied (12) présente(nt) au moins deux appuis de couples (27, 37 ; 39, 41), qui s'appliquent au tube profilé (14) latéralement en opposition diamétrale mutuelle.
